# EUROPÄISCHE PATENTSCHRIFT

(11) **EP 1 783 695 B1**
(45) Veröffentlichungstag und Bekanntmachung des Hinweises auf die Patenterteilung: **07.05.2014**
(21) Anmeldenummer: 06122983.7
(22) Anmeldetag: 26.10.2006
(51) Int. Cl.: G06F 21/35, G07C 9/00

(54) **Überwachung der Freigabe eines Computers**
Monitoring the unlocking of a computer
Surveillance du déverrouillage d'un ordinateur

(30) Priorität: 03.11.2005 DE 102005052949; 23.06.2006 DE 102006029339
(43) Veröffentlichungstag der Anmeldung: 09.05.2007
(73) Patentinhaber: TeraTron GmbH, 51647 Gummersbach (DE)
(72) Erfinder: Petsching, Wilfried, 51702 Bergneustadt (DE); Konrad, Reimund, 51647 Gummersbach (DE); Schmale, Ralf, 42499 Hückeswagen (DE); Döhl, Andreas, 51647 Gummersbach (DE)
(74) Vertreter: Cohausz & Florack

(56) Entgegenhaltungen:
- EP-A- 1 460 508
- EP-A2- 0 295 658
- EP-A2- 1 016 947
- WO-A-01/40928
- WO-A-97/39553
- DE-A1- 10 109 869

## Beschreibung

Die Erfindung betrifft im Allgemeinen die Überwachung und Kontrolle einer Zugangsberechtigung für ein Gerät, bei dem ein Abfragefeld durch ein Lesemodul ausgesendet wird und das Abfragefeld von zumindest einem Schlüssel empfangen wird.

Zugangberechtigungskontrollsysteme für Computer sind aus der Technik bekannt. Beispielsweise ist aus der europäischen Patentschrift EP 1 496 344 B1 eine Einrichtung zur Kontrolle der Berechtigung zur Bedienung eines Gerätes mit einer Betätigungseinheit bekannt. Bei der beschriebenen Anordnung wird über eine Sendespule ein elektromagnetisches Wechselfeld erzeugt. Ein Transponder, der in dieses elektromagnetische Wechselfeld eindringt, wird durch die Energie der elektrischen Komponente des elektromagnetischen Feldes gespeist. Mit Hilfe der elektrischen Energie des Wechselfeldes sendet der Transponder daraufhin ein Antwortsignal aus. Das Antwortsignal wird durch die Sendespule empfangen, die bereits das elektromagnetische Wechselfeld ausgesendet hat. Durch Austausch von Informationen über das elektromagnetische Wechselfeld kann eine Authentifizierung des Transponders erfolgen. Bei einer erfolgreichen Authentifizierung/Autorisierung wird der Computer freigegeben. Nachteilig an dieser Anordnung ist es, dass die Reichweite des elektromagnetischen Wechselfeldes nur schwer einstellbar ist. Da der Transponder durch die elektrische Energie des elektromagnetischen Wechselfelds gespeist wird, muss dessen Sendeenergie hoch sein. Bei der bekannten Anordnung kommt es zu Störungen beim Austauschen von Authentifizierungsinformationen immer dann, wenn der Transponder nicht ausreichend Energie aus dem elektromagnetischen Wechselfeld beziehen kann.

Ein ähnliches System ist aus der DE 40 15 482 C1 bekannt. Auch hier wird die Authentifizierung eines Nutzers über eine berührungslose Abfrage erzeugt. Wie auch zuvor beschrieben, weist dieses System eine einzige Sende- und Empfangsspule auf, die das elektromagnetische Wechselfeld erzeugt, mit dessen Hilfe der Transponder gespeist wird und die gleichzeitig das vom Transponder erzeugte Antwortfeld empfängt. Auch hier kommt es zu Problemen bei der Reichweiteneinstellung des Wechselfeldes und zu Störungen bei der Kommunikation zwischen Transponder und Sende-/Empfangsspule.

Schließlich ist auch aus der US 5,952,641 ein System bekannt, bei dem eine Zugangsberechtigung mit Hilfe eines elektromagnetischen Wechselfeldes berührungslos abgefragt wird. Auch hier wird über ein und dieselbe Spule ein Abfragefeld erzeugt und ein Antwortfeld empfangen. Der den Zugangsberechtigungscode enthaltende Transponder wird auch hier durch die elektrische Komponente des Abfragefeldes energetisch gespeist, so dass Probleme bei der Reichweiteneinstellung entstehen.

Die DE 101 09 869 betrifft ein System zum Fernsteuern einer Funktion (z. B. des Zugangs durch einen sicherbaren Eingang, beispielsweise eine Fahrzeugtür). Ein tragbarer Transceiver sendet ein Anforderungssignal auf einer Vielzahl von Frequenzen aus. Eine Basiseinheit empfängt das Anforderungssignal und führt die angeforderte Funktion, ansprechend auf den Empfang, aus. Die Basiseinheit (24) umfaßt Komponenten, die die eine Frequenz auswählen, auf der der tragbare Transceiver das Funktionsanforderungssignal aussendet, und die die ausgewählte Frequenz an den tragbaren Transceiver liefern. In einem Beispiel umfassen die Komponenten an der Basiseinheit Sende- bzw. Übertragungskomponenten, die ein Signal aussenden. Vorzugsweise sendet der tragbare Transceiver sein Signal in Hochfrequenz aus, und die Basiseinheit sendet ihr Signal als ein Niedrigfrequenz-Magnetfeld aus. In einem weiteren Beispiel ändert die Basiseinheit und/oder der tragbare Transceiver die Frequenz von davon ausgesendeten Signalen. In einem weiteren Beispiel sendet der tragbare Transceiver die Signal mit unterschiedlicher Frequenz aus, bis die Basiseinheit eines der Signale empfängt.

Die WO 97/39553 betrifft ein drahtloses Authentifikationssystem zur Steuerung eines Betriebszustands eines ersten Knotens (z. B. eines Computers) auf der Basis der Nähe eines befugten Benutzers zu dem ersten Knoten. Das drahtlose Authentifikationssystem umfasst eine In dem ersten Knoten implementierte Sicherheitsvorrichtung und ein Token zur Benutzerauthentlfizierung, das sich im Besitz des autorisierten Benutzers befindet (z. B. wird es getragen, mitgeführt, etc.). Die Sicherheitsvorrichtung erzeugt eine Abfragenachricht und übermittelt diese an das Token. Als Reaktion darauf erzeugt und übermittelt das Token eine Antwortnachricht an die Sicherheitsvorrichtung, wenn sich das Token innerhalb eines vorbestimmten Abstands zu der Sicherheitsvorrichtung befindet. Danach kann der autorisierte Benutzer auf den ersten Knoten zugreifen, da dieser sich in einem Betriebszustand befindet.

Die EP 1 016 947 A2 bezieht sich auf ein Sicherheitssystem, insbesondere auf eine tragbare elektronische Vorrichtung, die die RF-ID Technologie ("radio frequency identification"). Hierbei wird, wenn ein Transponder der elektronischen Einrichtung, beispielsweise ein Computer, präsentiert wird, aus dem Transponder der Identifikationscode ausgelesen. Dieser wird mit Codes, die in der elektronischen Einrichtung hinterlegt sind verglichen und bei einem positiven Ergebnis wird der Computer freigegeben.

Die EP 1 460 508 A betrifft ein System für die Kontrolle des Zugriffs durch einen Benutzer auf ein Gerät. Das System umfasst eine mit dem Gerät verbundene Kontrolleinheit, um an das Gerät wenigstens ein Zugriffsberechtigungssignal zu übertragen, und wenigstens einen mobilen Identifikationsträger, auf dem Anmeldedaten und Identifikationsdatensätze des Benutzers gespeichert sind und der mit der Kontrolleinheit drahtlos kommuniziert. Gemäß der Erfindung wird vorgeschlagen, dass die Kontrolleinheit eine Leseeinheit aufweist, die ein persönliches Identifikationsmerkmal des Benutzers erfasst. Es ist eine Programmeinheit, die anhand des Identifikationsmerkmals einen ersten Datensatz erzeugt, und eine Logikeinheit vorhanden, in welcher der erste Datensatz mit den gespeicherten Identifikationsdatensätzen verglichen wird. Bei einem erfolgreichen Vergleich des Datensatzes mit einem Identifikationsdatensatz wird ein Anmeldesignal mit den auf dem Identifikationsträger gespeicherten Anmeldedaten an die Kontrolleinheit gesandt. Das Zugriffsberechtigungssignal wird anhand der Anmeldedaten erzeugt und an das Gerät übertragen. Zusätzlich ist eine Präsenzkontrolle des Identifikationsträgers vorgesehen.

Die EP 0 295 658 A2 bezieht sich auf ein Identifikationssystem zum Freigegeben insbesondere einer Registerkasse.

Alle zuvor beschriebenen Systeme weisen den Nachteil auf, das aufgrund der energetischen Speisung des Transponders durch das Abfragefeld die Reichweiteneinstellung problematisch ist. Aus diesem Grunde schlagen alle diese Systeme vor, die Sende- und Empfangsantenne mit einer möglichst großen Antennenfläche zur Verfügung zu stellen. Alle Systeme müssen einen Kompromiss zwischen Antennengröße und Größe des Lesemoduls finden, so dass entweder die Größe des Lesemoduls oder die Abfragegenauigkeit unbefriedigend ist.

Daher lag der Erfindung die Aufgabe zugrunde, ein Zugangskontrollsystem für ein Gerät zur Verfügung zu stellen, welches eine hohe Abfragegenauigkeit bei gleichzeitig kleiner Bauweise des Lesemoduls ermöglicht.

Die Erfindung wird in den unabhängigen Patentansprüchen 1 und 5 beschrieben.

Das Gerät ist ein Computer. Dieser Computer ist bevorzugt an ein Netzwerk angeschlossen und die Freigabe erfolgt durch Freigabe eines Zugriffs auf das Netzwerk. Auch ist eine Entschlüsselung eines verschlüsselten Datenträgers in dem Computer eine mögliche Freigabe. Das Gerät kann auch eine Registerkasse sein, und eine Freigabe durch ein Öffnen und/oder Freigeben eines Geldfaches ermöglicht werden.

Es ist erkannt worden, dass die Reichweiteneinstellung immer dann problematisch ist, wenn der Schlüssel energetisch durch das Abfragefeld gespeist wird. Daher wird vorgeschlagen, dass der Schlüssel eigengespeist ein Antwortfeld erzeugt. Sobald der Schlüssel das Abfragefeld, bevorzugt die magnetische Komponente, das B-Feld, sensiert, wird dieser aktiviert. Jedoch bezieht der Schlüssel seine Energie nicht aus dem Abfragefeld, sondern weist eine eigene Energieversorgung auf. Durch diese eigene Energieversorgung wird das Antwortfeld erzeugt. Dieses Antwortfeld enthält den Zugangsberechtigungscode. In dem Lesemodul wird das Antwortfeld empfangen und die Zugangsberechtigung überprüft. Bei einer positiven Überprüfung wird der Computer freigegeben. Bevorzugt ist, wenn ein Netzzugang zu einem Computernetz durch den Computer freigegeben wird. Es ist jedoch auch möglich, dass der Zugriff auf den Computer selbst, beispielsweise durch eine Festplattenverschlüsselung, freigegeben wird. Auch ist bevorzugt, dass der Computer teil einer Registerkasse ist. In diesem Fall kann bei einer positiven Überprüfung des Schlüssels der Zugriff auf die Kasse und das Geldfach freigegeben werden. Dies ist beispielsweise in Supermärkten von Interesse, da die Kassen somit vor fremden Zugriffen geschützt werden.

Der Austausch des Zugangsberechtigungscodes über das Antwortfeld erfolgt bevorzugt verschlüsselt. Geeignete Verschlüsselungsalgorithmen sind bekannt.

Das Abfragefeld kann beispielsweise mit einem eindeutigen Bezeichner codiert sein. Dieser eindeutige Bezeichner kann beispielsweise den Computer bezeichnen, für den eine Zugangsberechtigung abgefragt wird. Der Schlüssel kann aus dem empfangenen Abfragefeld den eindeutigen Bezeichner ermitteln, und beispielsweise nur dann reagieren, wenn der eindeutige Bezeichner mit einem von mehreren in dem Schlüssel hinterlegten eindeutigen Bezeichnen übereinstimmt. Dadurch kann der Schlüssel für bestimmte Computer programmiert werden.

Das Abfragefeld wird bevorzugt im Broadcast-Modus ausgesendet. D. h., dass das Abfragefeld in regelmäßigen Abständen durch das Lesemodul erzeugt wird und von allen Schlüsseln, die in der Reichweite des Abfragefeldes sind, empfangen werden kann.

Empfängt der Schlüssel das Abfragefeld, wertet dieser die im Abfragefeld enthaltenden Daten aus, beispielsweise den eindeutigen Bezeichner. Stimmt dieser mit einem für den Schlüssel vorgesehenen eindeutigen Bezeichner überein, meldet sich der Schlüssel bei dem Lesemodul an. Hierzu sendet der Schlüssel ein elektromagnetisches Antwortfeld aus, welches einen Zugangsberechtigungscode enthält. Es ist beispielsweise möglich, dass der Schlüssel zunächst nur seine Identifikationsnummer übermittelt. Diese Identifikationsnummer wird in dem Lesemodul aus dem Antwortfeld ermittelt. Stimmt die Identifikationsnummer mit einer Identifikationsnummer aus einer in dem Lesemodul oder dem Computer gespeicherten Liste überein, so wird eine Authentifizierung des Schlüssels durchgeführt. Hierbei werden Authentifizierungsinformationen bevorzugt verschlüsselt über das elektromagnetische Antwortfeld zwischen Schlüssel und Lesemodul ausgetauscht und bei erfolgreicher Authentifizierung wird der Computer durch das Lesemodul frei geschaltet.

Es ist auch möglich, dass mehrere Schlüssel gleichzeitig das Abfragefeld sensieren. Um eine Störung der jeweils von den Schlüsseln ausgesendeten Antwortfelder untereinander zu vermeiden, wird auch vorgeschlagen, vor dem Aussenden des Antwortfeldes eine Anti-Kollisionsüberprüfung durchzuführen. Dabei kann beispielsweise ein Carrier-Sense-Multiple-Access (CSMA) Algorithmus angewandt werden. Auch ist ein Collision-Detect (CD) Modus aktivierbar.

Die Authentifizierung des Schlüssels erfolgt in regelmäßigen Abständen. Dadurch wird erreicht, dass der Computer gesperrt wird, falls sich der Schlüssel von dem Lesemodul entfernt. Ist dies der Fall, wird erneut durch das Lesemodul das Abfragefeld erzeugt.

Das Lesemodul sendet ein niederfrequentes Abfragefeld aus. Dieses niederfrequente Abfragefeld ist bevorzugt ein magnetisches Feld, welches mit Hilfe einer Spule erzeugt wird. Dadurch, dass das Abfragefeld niederfrequent ist, lässt sich dessen Reichweite leicht einstellen. Bevorzugt sind Reichweiten zwischen 30 und 90cm. Im Nahbereich ist die Feldstärke des magnetischen Feldes proportional zu 1/r³. Die Sendeantenne im Lesemodul und die Empfangsantenne im Schlüssel für das Abfragefeld sind für eine magnetische Kopplung ausgelegt. Die Antennen sind Spulen, deren ausgesendetes Feld eine im Vergleich zum elektrischen Anteil erheblich höheren magnetischen Anteil hat. Das Abfragefeld ist somit bevorzugt ein magnetisches Feld.

Wird in dem Schlüssel eine Empfangsschwelle für eine bestimmte Feldstärke des Magnetfeldes eingestellt, so kann die Reichweite des Abfragefeldes sehr genau eingestellt werden.

Das Lesemodul ist zum Aussenden eines 125kHz Abfragefeldes eingerichtet.

Um zu erreichen, dass die Baugröße des Lesemoduls klein bleibt, wird auch vorgeschlagen, dass das Lesemodul eine das Abfragefeld erzeugende Sendespule aufweist. Da das Abfragefeld nur eine geringe Reichweite aufweisen muss und außerdem nicht zur energetischen Speisung des Schlüssels dient, reicht eine Sendespule von kleiner Baugröße.

Um einen guten Empfang des Antwortfeldes zu ermöglichen, wird auch vorgeschlagen, dass das Lesemodul eine von der Sendespule getrennte Empfangsantenne aufweist. Über die Empfangsantenne kann das Antwortfeld empfangen werden. Die Empfangsantenne im Lesemodul ist eine an Hochfrequenzen angepasste HF-Antenne. Die HF-Antenne ist an den Empfangsschaltkreis angepasst. Die Antenne kann als Loop (Schleife) auf der Leiterbahn gebildet sein. Es ist erkannt worden, dass durch die Verwendung einer Sendespule und einer davon getrennten Empfangsantenne die Übertragungsqualität bei gleichzeitiger Reduktion der Baugröße erhöht werden kann.

Zum Empfangen des Abfragefeldes weist der Schlüssel bevorzugt eine Empfangsspule auf. Diese Empfangsspule kann beispielsweise eine richtungsunabhängige Empfangscharakteristik aufweisen. Dies ist beispielsweise mit Hilfe einer 3-D Ferrit-Spule möglich. Bei einer solchen 3-D Ferrit-Spule sind drei Spulen angeordnet, die in drei senkrecht zueinander stehenden Ebenen ausgerichtet sind. Die Empfangsspule ist für den Empfang eines Magnetfeldes ausgelegt.

Bevorzugt ist gemäß eines vorteilhaften Ausführungsbeispiels, dass der Schlüssel zur Erzeugung des Antwortfeldes eine Treiberschaltung aufweist. Die Treiberschaltung beaufschlagt eine Sendeantenne mit einem den Zugangsberechtigungscode aufweisenden Freigabesignal. Die Sendeantenne ist bevorzugt dazu ausgelegt, hochfrequente Felder auszusenden. Über die Sendeantenne wird das Antwortfeld erzeugt. Dieses weist den Zugangsberechtigungscode auf. Der Zugangsberechtigungscode wird mittels eines Freigabesignals an die Sendeantenne angelegt. Das Freigabesignal zusammen mit dem Zugangsberechtigungscode wird in einer Treiberschaltung erzeugt.

Die Treiberschaltung ist batteriegespeist. In diesem Fall wird die Energieversorgung für das Antwortfeld durch eine Batterie ermöglicht. Es ist nicht mehr notwendig, dass die Treiberschaltung ihre Energie über das Abfragefeld bezieht. Vielmehr ermöglicht eine solche Ausgestaltung eine eigengespeiste Erzeugung des Antwortfeldes.

Das Antwortfeld ist ein hochfrequentes, elektromagnetisches Feld. Es hat sich gezeigt, dass eine Frequenz im Megahertzbereich zwischen 400 und 950 Mhz, bspw. 433MHz, 868MHz 915MHz, 916MHz, für das Antwortfeld vorteilhaft ist. Dieses Frequenzband ist ein frei nutzbares ISM-Band und somit gebührenfrei. Das Antwortfeld ist ein elektrisches Feld mit einem elektrischen Feldanteil, der erheblich höher ist als der magnetische Anteil.

Wie bereits zuvor erwähnt, ist es besonders bevorzugt, dass das Lesemodul eine Empfangsantenne zum Austauschen von Authentifizierungsinformationen mit dem Schlüssel nach dem Empfangen eines Zugangsberechtigungscodes aufweist. Die Empfangsantenne ist derart gebildet, dass sie für den Empfang von Hochfrequenzfeldern optimiert ist. Über die Empfangsantenne kann das Lesemodul mit dem Schlüssel Informationen über ein Hochfrequenzfeld austauschen. Dadurch, dass der Schlüssel das Hochfrequenzfeld eigengespeist erzeugt, kann dieses eine hohe E-Feldstärke aufweisen, so dass die Empfangsantenne kleinbauend gestaltet sein kann.

Ein weiterer Gegenstand ist ein Verfahren zur Kontrolle einer Zugangsberechtigung für ein Gerät mit Aussenden eines Abfragefeldes durch ein Lesemodul und Empfangen des Abfragefeldes durch einen Schlüssel. Dieses Verfahren ist gekennzeichnet durch ein eigengespeistes Aussenden eines elektromagnetischen Antwortfeldes mit einem Zugangsberechtigungscode durch den Schlüssel beim Empfangen des Abfragefeldes und Freigeben des Gerätes beim Empfangen des Zugangsberechtigungscodes durch das Lesemodul.

Um zu gewährleisten, dass ein Schlüssel in dem Empfangsbereich des Lesemoduls schnell erkannt wird, wird vorgeschlagen, dass das Abfragefeld mit zeitlichen Abständen erzeugt wird und nach dem Aussenden des Abfragefeldes ein Empfangen des Zugangsberechtigungscodes überwacht wird. In dem Lesemodul wird in einem so genannten Broadcast-Modus das Abfragefeld in zeitlichen Abständen erzeugt und es wird überwacht, ob in Antwort auf das Abfragefeld ein Antwortfeld mit einem Zugangsberechtigungscode empfangen wird.

Es wird ein den Zugangsberechtigungscode aufweisendes Freigabesignal zur Erzeugung des Antwortfeldes beim Empfangen des Abfragefeldes im Schlüssel eigengespeist erzeugt. Der Schlüssel erzeugt hierzu durch eine Batteriespeisung ein Freigabesignal, welches den Zugangsberechtigungscode enthält. Das Freigabesignal wird an die Sendeantenne des Schlüssels angelegt und ein Hochfrequenzfeld erzeugt.

Nachdem der Schlüssel über das hochfrequente Antwortfeld den Zugangsberechtigungscode oder zumindest seine Identifikationsnummer an das Lesemodul übermittelt hat, wird zwischen Lesemodul und Schlüssel über das hochfrequente Antwortfeld eine Authentifizierung des Schlüssels durchgeführt und der Computer nur bei einer erfolgreichen Authentifizierung freigeschaltet.

Um zu überwachen, ob der Schlüssel im Empfangsbereich des Lesemoduls verbleibt, oder aus dem Empfangsbereich des Lesemoduls entfernt wird, wird vorgeschlagen, dass die Authentifizierungsinformation in zeitlichen Abständen zwischen Lesemodul und Schlüssel ausgetauscht werden und dass der Computer nur bei erfolgreicher Authentifizierung freigeschaltet bleibt. Dies bedeutet, dass für den Zeitraum, in dem der Schlüssel in dem Empfangsbereich des Lesemoduls verbleibt, der Computer freigeschaltet bleibt. Dies wird durch eine regelmäßige Abfrage des Schlüssels sichergestellt.

Entfernt sich der Schlüssel aus dem Empfangsbereich des Lesemoduls, wird der Computer gesperrt. Entfernt sich der Benutzer vom Computer, wird der Computer automatisch gesperrt.

Durch die automatische Freigabe und Sperrung des Computers müssen Benutzer nicht mehr aufgefordert werden, ihre Passwörter für den Zugang zum Computer einzugeben und beim Verlassen des Computers diesen vor fremden Zugriffen zu schützen. Die Sicherheit von Computernetzen wird erheblich erhöht, da der Zugang zu dem Computer automatisch gesperrt wird, wenn ein berechtigter Benutzer, beziehungsweise der dem Benutzer zugeordnete Schlüssel, sich aus dem Empfangsbereich des Lesemoduls entfernt.

Durch eine magnetische Kopplung zwischen Lesemodul und Schlüssel mit Hilfe des magnetischen Abfragefeldes kann eine genaue Reichweiteneinstellung erzielt werden. Daher wird der Computer nur dann freigeschaltet, falls sich ein berechtigter Schlüssel in einem bestimmten Umkreis um das Lesegerät herum befindet. Es wird verhindert, dass Schlüssel, die sich beispielsweise weiter als 1,50m vom Lesemodul entfernt befinden, eine zufällige Freigabe des Computers verursachen.

Bevorzugt ist die Sicherung eines Computers über eine Datenträgerverschlüsselung. In diesem Fall kann durch die Freigabe des Computers durch eine Entschlüsselung des Datenträgers erfolgen. Datenträger können Festplatten, Disketten, optische Datenträger, USB Datenträger oder andere sein.

Diese und weitere Vorteile ergeben sich auch aus den nachgeordneten Ansprüchen. Nachfolgend wird die Erfindung anhand einer ein Ausführungsbeispiel zeigenden Zeichnung näher erläutert.

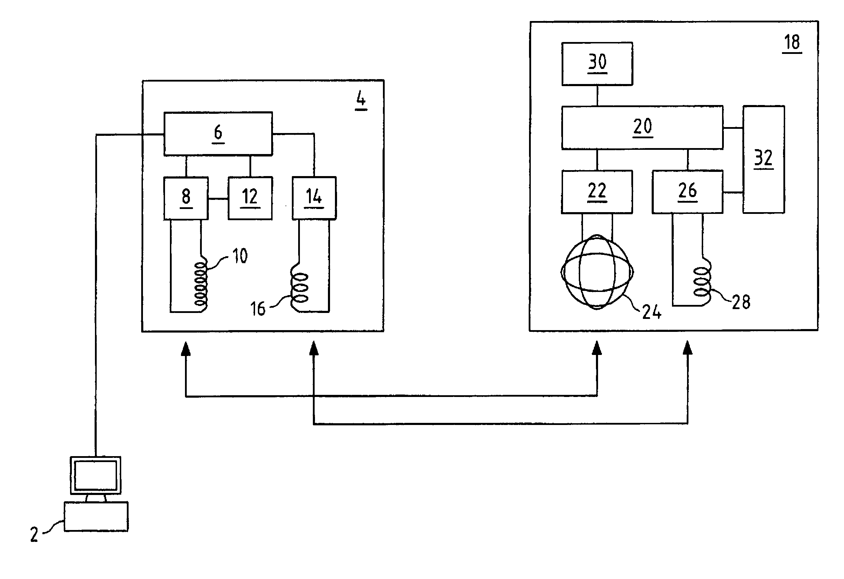

In der Zeichnung zeigt die einzige Figur ein System zur Kontrolle einer Freigabeberechtigung. Gezeigt ist ein Computer 2, der mit einem Lesemodul 4 verbunden ist. Das Lesemodul 4 weist eine Steuerung 6, eine erste Sende-/ Empfangseinheit 8, eine Spule 10, ein Speichermodul 12, eine zweite Sende-/Empfangseinheit 14, und eine Hochfrequenzantenne 16 auf. Weiter dargestellt ist ein Schlüssel 18. Der Schlüssel 18 weist eine Steuerung 20, eine Sende-/Empfangseinheit 22, eine 3-D Ferrit Spule 24, eine Treiberschaltung 26, eine Hochfrequenzantenne 28, eine Speichereinheit 30 sowie eine Energieversorgung 32 auf.

Die Spulen 10 und 24 sind zum Aussenden und Empfangen von niederfrequenten Magnetfeldern zwischen 100kHz und 150kHz ausgelegt. Die Sende-/Empfangseinheiten 8 und 22 sind auf das Aussenden und Empfangen dieser niederfrequenten Felder abgestimmt.

Die Sende-/Empfangseinheit 14 ist darauf abgestimmt, Hochfrequenzfelder über die Hochfrequenzantenne 16 zu senden und zu empfangen. Bevorzugt werden hier Trägersignale mit 868MHz an die HF-Antenne 16 angelegt. Die Treiberschaltung 26 ist ebenfalls zum Empfangen und Senden von Hochfrequenzfeldern bei 868MHz ausgelegt. Die Treiberschaltung 26 legt an die HF-Antenne 28 ein entsprechendes Trägersignal an.

Die Speichereinheit 12 speichert unter anderem einen eindeutigen Bezeichner für das Lesemodul 4, respektive den Computer 2. Außerdem kann die Speichereinheit 12 Zugangsberechtigungscodes von Schlüsseln speichern. Weiterhin können in der Speichereinheit 12 Schlüssel für eine verschlüsselte Kommunikation abgespeichert sein.

Die Speichereinheit 30 speichert eine Identifikationsnummer des Schlüssels 18. Außerdem kann die Speichereinheit 30 eine Liste von eindeutigen Bezeichnern von Empfangsmodulen sowie verschiedene Schlüssel für eine verschlüsselte Kommunikation abspeichern.

Die Energieversorgung 32 wird durch eine Batterie gewährleistet.

Die Steuerungen 6 und 20 steuern die Interoperation zwischen den Modulen innerhalb des Lesemoduls 4, respektive des Schlüssels 18. Die Steuerungen 6, 20 weisen hierzu integrierte Schaltkreise und Mikroprozessoren auf, die entsprechend programmiert sind. Die Funktion des dargestellten Systems ist wie folgt:

Der Computer 2 ist derart eingerichtet und mit dem Lesemodul 4 verbunden, dass dieser über das Lesemodul 4 Freigabeinformationen enthält und nur dann einen Zugriff zulässt, wenn das Lesemodul 4 eine entsprechende Information an den Computer 2 übermittelt hat. Zunächst ist der Computer 2 gesperrt. Das Lesemodul 4 steuert über seine Steuerung 6 die Sende-/Empfangseinheit 8 an. Die Sende-/Empfangseinheit 8 ermittelt aus der Speichereinheit 12 ihren eindeutigen Bezeichner. Der eindeutige Bezeichner wird auf ein 125kHz Trägersignal aufmoduliert. Das Trägersignal wird über die Spule 10 ausgesendet. Die magnetische Feldstärke des Trägersignals 10 lässt sich über die Sende-/Empfangseinheit 8 einstellen. Bevorzugt ist die magnetische Feldstärke derart, dass das von der Spule 10 erzeugte Abfragefeld eine Reichweite zwischen 0,3 und 1,2m hat. Das von der Spule 10 ausgesendete, niederfrequente Magnetfeld wird in der 3-D Ferrit Spule 24 empfangen. Das von der Spule 24 empfangene niederfrequente Signal wird in der Sende-/Empfangseinheit 22 demoduliert. Der in dem Signal enthaltene eindeutige Bezeichner des Empfangsmoduls 4 wird ermittelt und an die Steuerung 20 übergeben. In der Steuerung 20 wird mit Hilfe der in der Speichereinheit 30 gespeicherten eindeutigen Bezeichnen überprüft, ob der empfangene eindeutige Bezeichner mit einem dem Schlüssel 18 zugeordnetem eindeutigen Bezeichner übereinstimmt. Ist dies der Fall, wird der Schlüssel 18 aktiv.

Hierzu ermittelt die Steuerung 20 aus der Speichereinheit 30 eine Identifikationsnummer des Schlüssels 18. Diese Identifikationsnummer des Schlüssels 18 wird an die Treiberschaltung 26 übergeben. Die Treiberschaltung 26 bezieht ihre Energie aus der Energieversorgung 32. Die Treiberschaltung 26 erzeugt mit der aus der Energieversorgung 32 erhaltenen Energie ein Trägersignal bei 868MHz, welches die Identifikationsnummer des Schlüssels 18 enthält. Dieses Trägersignal wird an die HF-Antenne 28 angelegt und ein elektrisches HF Feld wird ausgesendet.

Das von der HF-Antenne 28 ausgesendete Trägersignal wird durch die HF-Antenne 16 des Lesemoduls 4 empfangen. Das empfangene Signal wird in der Sende-/Empfangseinheit 14 ausgewertet und die Identifikationsnummer des Schlüssels 18 wird extrahiert. Die Identifikationsnummer des Schlüssels 18 wird an die Steuerung 6 übergeben. Die Steuerung 6 überprüft, ob in der Speichereinheit 12 eine entsprechende Identifikationsnummer abgespeichert ist. In der Speichereinheit 12 sind beispielsweise alle Identifikationsnummern aller Schlüssel 18 gespeichert, die für die Freigabe des Computers 2 programmiert sind.

Ist die Identifikationsnummer des Schlüssels 18 in der Speichereinheit 12 gespeichert, instruiert die Steuerung 6 die Sende-/Empfangseinheit 14, eine Authentifizierung mit dem Schlüssel durchzuführen. Hierzu werden bidirektional über die HF-Antennen 16, 28 Authentifizierungsinformationen zwischen Lesemodul 4 und Schlüssel 18 ausgetauscht. Hierbei werden in den Speichereinheiten 12, 30 gespeicherte Schlüssel ausgetauscht und entsprechend kodiert. Es eignen sich dazu beispielsweise asymmetrische Verschlüsselungsverfahren. Nachdem eine Authentifizierung erfolgreich durchgeführt wurde, teilt das Lesemodul 4 dem Computer 2 mit, dass dieser freizugeben ist. Der Computer 2 ist daraufhin durch den Benutzer verfügbar. Beispielsweise kann diese Freigabe eine Freigabe auf ein Netzwerk enthalten.

Um zu gewährleisten, dass der Schlüssel 18 im Empfangsbereich des Lesemoduls 4 verbleibt und somit der Computer freigegeben bleiben kann, sendet das Lesemodul 4 in regelmäßigen Abständen über die HF-Antenne 16 Abfragesignale aus, um abzufragen, ob der Schlüssel 18 weiterhin im Empfangsbereich ist. Nur bei einer entsprechenden Antwort des Schlüssels 18 über die HF-Antenne 28 bleibt der Computer 2 entsperrt. Erfolgt auf eine Abfrage über die Antenne 16 keine entsprechende Antwort des Schlüssels 18 über die Antenne 28, so teilt die Steuerung 6 des Lesemoduls 4 dem Computer 2 mit, dass dieser gesperrt werden muss. Der Computer 2 aktiviert daraufhin seine Zugangssperrung, und ein Zugriff auf den Computer 2, respektive das an den Computer 2 angeschlossene Netzwerk, ist nicht mehr möglich.

Um zu überprüfen, ob ein Schlüssel 18 erneut in der Nähe des Lesemoduls 4 ist, sendet das Lesemodul 4 in regelmäßigen Abständen über die Spule 10 Abfragesignale aus. Befindet sich kein Schlüssel 18 in dem magnetischen Feld der Spule 10, so verbleibt der Computer 2 gesperrt. Bewegt sich ein Schlüssel 18 in das Magnetfeld der Spule 10, so erfolgt eine zuvor beschriebene Überprüfung des Schlüssels 18, und bei einer positiven Überprüfung wird der Computer 2 erneut freigegeben.

Das erfindungsgemäße Verfahren und die erfindungsgemäße Vorrichtung ermöglichen eine berührungslose Authentifizierung von Benutzern für Computer. Durch die Verwendung von unterschiedlichen Sende- und Empfangsspulen sowohl im Lesemodul 4 als auch im Schlüssel 18 wird gewährleistet, dass bei einer genauen Reichweiteeinstellung eine hohe Übertragungssicherheit ermöglicht wird. Das Lesemodul 4 und der Schlüssel 18 können kleinbauend gebildet sein, da die Abfragefelder nur mit niedriger Energie ausgestrahlt werden müssen, und der Schlüssel 18 eigengespeist ist.

## Patentansprüche

1. Vorrichtung zur Kontrolle einer Zugriffberechtigung für einen Computer (2) mit einem ein elektromagnetisches Abfragefeld zwischen 100kHz und 150kHz aussendenden Lesemodul (4), und
zumindest einem das Abfragefeld empfangenden Schlüssel (18),
wobei das Abfragefeld mit einem eindeutigen den Computer bezeichnenden Bezeichner codiert ist, wobei der Schlüssel den eindeutigen Bezeichner aus dem Abfragefeld ermittelt,
wobei der Schlüssel nur dann reagiert, wenn der eindeutige Bezeichner mit einem von mehreren in dem Schlüssel hinterlegten eindeutigen Bezeichnern übereinstimmt,
wobei der Schlüssel (18) zum eigengespeisten Aussenden zumindest seiner Identifikationsnummer beim Empfangen des Abfragefeldes über ein hochfrequentes Antwortfeld zwischen 400MHz und 950MHz eingerichtet ist, und wobei der Schlüssel (18) eine Batterie aufweist, wobei
das Lesemodul (4) zum Austauschen von Authentifizierungsinformation mit dem Schlüssel (18) über das hochfrequentes Antwortfeld nach einer Übereinstimmung der Identifikationsnummer mit einer Identifikationsnummer aus einer in dem Lesemodul oder dem Computer gespeicherten Liste eingerichtet ist,
wobei die Authentifizierungsinformation bidirektional über Hochfrequenz-Antennen (16, 28) über das hochfrequente Antwortfeld zwischen dem Lesemodul (4) und dem Schlüssel (18) ausgetauscht werden, wobei
das Lesemodul (4) zum Freigeben des Computers (2) nach einer erfolgreichen Authentifizierung des Schlüssels (18) eingerichtet ist,
wobei die Authentifizierungsinformation in regelmäßigen zeitlichen Abständen zwischen Lesemodul (4) und dem Schlüssel (18) über das hochfrequente Antwortfeld ausgetauscht wird, und wobei
der Computer (2) nur bei erfolgreicher Authentifizierung freigeschaltet bleibt.

2. Vorrichtung nach Anspruch 1, **dadurch gekennzeichnet, dass** der Schlüssel (18) eine das Abfragefeld empfangende Empfangsspule (24) aufweist.

3. Vorrichtung nach einem der vorangehenden Ansprüchen, **dadurch gekennzeichnet, dass** eine Empfangsspule (24) eine im Wesentlichen richtungsunabhängige Empfangscharakteristik hat.

4. Vorrichtung nach einem der vorangehenden Ansprüchen, **dadurch gekennzeichnet, dass** eine Treiberschaltung (26) batteriegespeist ist.

5. Verfahren zur Kontrolle einer Zugangsberechtigung für einen Computer mit Aussenden eines elektromagnetischen Abfragefeldes zwischen 100kHz und 150kHz durch ein Lesemodul (4) und Empfangen des Abfragefeldes durch einen Schlüssel (18),
wobei das Abfragefeld mit einem eindeutigen den Computer bezeichnenden Bezeichner codiert wird,
wobei der eindeutige Bezeichner aus dem Abfragefeld von dem Schlüssel ermittelt wird,
wobei der Schlüssel nur dann reagiert, wenn der eindeutige Bezeichner mit einem von mehreren in dem Schlüssel hinterlegten eindeutigen Bezeichnern übereinstimmt, und
wobei der Schlüssel (18) zum eigengespeisten Aussenden zumindest seiner Identifikationsnummer beim Empfangen des Abfragefeldes über ein hochfrequentes Antwortfeld zwischen 400MHz und 950MHz eingerichtet ist, wobei der Schlüssel (18) eine Batterie aufweist, wobei Authentifizierungsinformation von dem Lesemodul (4) mit dem Schlüssel (18) über das hochfrequentes Antwortfeld nach einer Übereinstimmung der Identifikationsnummer mit einer Identifikationsnummer aus einer in dem Lesemodul oder dem Computer gespeicherten Liste ausgetauscht wird,
wobei die Authentifizierungsinformation bidirektional über Hochfrequenz-Antennen (16, 28) über das hochfrequente Antwortfeld zwischen dem Lesemodul (4) und dem Schlüssel (18) ausgetauscht werden, wobei
der Computer (2) nach erfolgreicher Authentifizierung des Schlüssels (18) von dem Lesemodul (4) freigeben wird, wobei die Authentifizierungsinformation in regelmäßigen zeitlichen Abständen zwischen Lesemodul (4) und dem Schlüssel (18) über das hochfrequente Antwortfeld ausgetauscht wird, und wobei der Computer (2) nur bei erfolgreicher Authentifizierung freigeschaltet bleibt.

6. System zur Kontrolle einer Zugriffberechtigung
mit einem Computer (2) und einer Vorrichtung nach einer der vorherigen Ansprüche 1 bis 4.

7. System nach Anspruch 6, **dadurch gekennzeichnet, dass** die Freigabe des Computers durch eine Entschlüsselung eines Datenträgers in dem Computer realisiert ist.

8. System nach Anspruch 6, **dadurch gekennzeichnet, dass** der Computer (2) Teil einer Registerkasse ist.

9. System nach Anspruch 8, **dadurch gekennzeichnet, dass** die Freigabe der Registerkasse durch eine Freigabe eines Geldfaches in der Registerkasse realisiert ist.

## Claims

1. Device for controlling an access authorisation for a computer (2) comprising a reading module (4) sending out an electromagnetic query field between 100kHz and 150kHz, and
at least one key (18) receiving the query field,
the query field being encoded with a unique identifier identifying the computer, the key determining the unique identifier from the query field,
the key only reacting if the unique identifier matches one of the several unique identifiers stored in the key,
the key (18) being configured to sending out at least its identification number self-powered when receiving the query field via a high-frequency response field between 400MHz and 950MHz, and the key (18) being equipped with battery,
the reading module (4) being configured for exchanging authentication information with the key (18) using the high-frequency response field subsequent to a conformity of the identification number with an identification number from a list stored in the reading module or the computer,
the authentication information being exchanged bidirectionally via high-frecluency antennas (16, 28) using the high-frequency response field between the reading module (4) and the key (18),
the reading module (4) being configured to release the computer (2) after successful authentication of the key (18),
the authentication information being exchanged between reading module (4) and the key (18) at regular intervals using the high-frequency response field, and
the computer (2) only remaining released in the event of successful authentication.

2. Device in accordance with claim 1, **characterised in that** the key (18) comprises a receiver coil (24) receiving the query field.

3. Device in accordance with one of the previous claims, **characterised in that** the receiver coil (24) has essentially direction-independent reception characteristics.

4. Device in accordance with one of the previous claims, **characterised in that** a driver circuit (26) is battery supplied.

5. Method for controlling an access authorisation for a computer, comprising sending out of an electromagnetic query field between 100kHZ and 150kHz by a reading module (4) and the receiving of a query field by a key (18),
the query field being encoded with a unique identifier identifying the computer, the unique identifier being determined by the key from the query field,
the key only reacting if the unique identifier matches one of several uniques identifiers stored in the key, and
the key (18) being configured for sending out at least its identification number self-powered when receiving the query field via a high-frequency response field between 400MHz and 950MHz,
the key (18) halving a battery,
the authentication information being exchanged by the reading module (4) with the key (18) via the high-frequency response field after a conformity of the identification number with an identification number from a list stored in the reading module or the computer,
the authentication information being exchanged bidirectionally between the reading module (4) and the key (18) using high-frequency antennas (16, 28) using the high-frequency response field,
the computer (2) being released by the reading module (4) after successful authentication of the key (18), the authentication information being exchanged between reading module (4) and the key (18) at regular intervals using the high-frequency response field, and the computer (32) only remaining released in the event of successful authentication.

6. System for controlling an access authorisation
comprising a computer (2) and a device in accordance with one of the previous claims 1 to 4.

7. System in accordance with claim 6, **characterised in that** the release of the computer is performed by decrypting a data storage medium in the computer.

8. System in accordance with claim 6, **characterised in that** the computer (2) is part of a cash register.

9. System in accordance with claim 8, **characterised in that** the release of the cash register is performed by releasing the cash drawer in the cash register.

## Revendications

1. Dispositif de contrôle d'une autorisation d'accès pour un ordinateur (2) avec un module de lecture (4) émettant un champ d'interrogation électromagnétique entre 100 kHz et 150 kHz, et
au moins une clé (18) recevant le champ d'interrogation,
ou le champ d'interrogation est codé avec un identificateur unique identifiant l'ordinateur, où la clé détermine l'identifiant unique en provenance du champ d'interrogation,
où la clé ne réagit que lorsque l'identifiant unique correspond à un parmi plusieurs identifiant uniques déposés dans la clé,
où la clé (18) est adaptée de sorte à émettre de manière autonome au moins son numéro d'identification lors de la réception du champ d'interrogation à l'aide d'un champ de réponse haute fréquence entre 400MHz et 950MHz, et où la clé (18) présente une batterie, où
le module de lecture (4) est adapté de sorte à échanger des informations d'authentification avec la clé (18) à l'aide du champ de réponse haute fréquence lors d'une correspondance du numéro d'identification avec le numéro d'identification en provenance d'une liste mémorisée dans le module de lecture ou dans l'ordinateur,
où les informations d'authentification sont échangées de manière bidirectionnelle à travers des antennes haute fréquence (16, 28) à l'aide du champ de réponse haute fréquence entre le module de lecture (4) et la clé (18), où le module de lecture (4) est adapté de sorte à déverrouiller l'ordinateur (2) après une authentification réussie de la clé (18),
où les informations d'authentification sont échangées à intervalles temporels réguliers entre le module de lecture (4) et la clé (18) à l'aide du champ de réponse haute fréquence, et où
l'ordinateur (2) reste déverrouillé uniquement lors d'une authentification réussie.

2. Dispositif selon la revendication 1, **caractérisé en ce que** la clé (18) présente une bobine d'réception (24) recevant le champ d'interrogation.

3. Dispositif selon une des revendications précédentes, **caractérisé en ce qu'**une bobine de réception (24) présente une caractéristique de rémission étant essentiellement omnidirectionnelle.

4. Dispositif selon une des revendications précédentes, **caractérisé en ce qu'**un circuit d'attaque (26) est alimenté par batterie.

5. Procédé de contrôle d'une autorisation d'accès pour un ordinateur avec une émission d'un champ d'interrogation électromagnétique entre 100 kHz et 150 kHz par un module de lecture (4) et réception du champ d'interrogation par une clé (18),
où le champ d'interrogation est codé avec un identificateur unique identifiant l'ordinateur,
où la clé détermine l'identifiant unique en provenance du champ d'interrogation, où la clé ne réagit que lorsque l'identifiant unique correspond à un parmi plusieurs identifiants uniques déposés dans la clé,
où la clé (18) est adaptée de sorte à émettre de manière autonome au moins son numéro d'identification lors de la réception du champ d'interrogation à l'aide d'un champ de réponse haute fréquence entre 400MHz et 950MHz, et où la clé (18) présente une batterie, où
les informations d'authentification sont échangées par le module de lecture (4) avec la clé (18) à l'aide du champ de réponse haute fréquence lors d'une correspondance du numéro d'identification avec le numéro d'identification en provenance d'une liste mémorisée dans le module de lecture ou dans l'ordinateur,
où les informations d'authentification sont échangées de manière bidirectionnelle à travers des antennes haute fréquence (16, 28) à l'aide du champ de réponse haute fréquence entre le module de lecture (4) et la clé (18), où l'ordinateur (2) est déverrouillé après une authentification réussie de la clé (18) par le module de lecture (4), où les informations d'authentification sont échangées à intervalles temporels réguliers entre le module de lecture (4) et la clé (18) à l'aide du champ de réponse haute fréquence, et où l'ordinateur (2) reste déverrouillé uniquement lors d'une authentification réussie.

6. Système de contrôle d'une autorisation d'accès
avec un ordinateur (2) et un dispositif selon une des revendications précédentes de 1 à 4.

7. Système selon la revendication 6, **caractérisé en ce que** le déverrouillage de l'ordinateur est susceptible d'être réalisé par un décodage d'un support de données dans l'ordinateur.

8. Système selon la revendication 6, **caractérisé en ce que** l'ordinateur (2) est une caisse enregistreuse.

9. Système selon la revendication 8, **caractérisé en ce que** le déverrouillage de la caisse enregistreuse est susceptible d'être réalisé par le déverrouillage d'un compartiment de monnaie dans la caisse enregistreuse.
